# DEMANDE DE BREVET EUROPEEN

(11) **EP 2 868 959 A1**
(43) Date de publication de la demande: **06.05.2015**
(21) Numéro de dépôt: 14190726.1
(22) Date de dépôt: 28.10.2014
(51) Int. Cl.: F16L 55/11, B23P 19/02, B25B 27/02

(54) **Dispositif et procédé d'obturation d'une extrémité d'un conduit**

(30) Priorité: 30.10.2013 FR 1302519
(71) Demandeur: Dassault Aviation, 75008 Paris (FR)
(72) Inventeur: Jaoui, Pascal, 78580 LES ALLUETS LE ROI (FR); Babaz, Pascal, 74370 ST MARTIN BELLEVUE (FR); Cohen, Yannick, 74960 MEYTHET (FR)
(74) Mandataire: Blot, Philippe Robert Emile

(57) **Abrégé**

Ce dispositif d'obturation (36) d'une extrémité d'un conduit par un bouchon d'étanchéité comprenant une jupe tubulaire munie d'un alésage axial, préalablement insérée dans l'extrémité dudit conduit, et une goupille destinée à être enfoncée axialement dans l'alésage de ladite jupe pour assurer un contact étanche entre ladite jupe et ladite extrémité, comprend des moyens d'enfoncement (38) propres à enfoncer ladite goupille dans l'alésage de ladite jupe.

Le dispositif d'obturation (36) est caractérisé en ce qu'il comporte en outre des moyens de détermination (62) propres à déterminer une position axiale instantanée de ladite goupille par rapport à ladite jupe au fur et à mesure de l'enfoncement de ladite goupille dans l'alésage de ladite jupe par lesdits moyens d'enfoncement (38).

## Description

La présente invention concerne un dispositif d'obturation d'une extrémité d'un conduit par un bouchon d'étanchéité comprenant une jupe tubulaire munie d'un alésage axial, préalablement insérée dans l'extrémité dudit conduit, et une goupille destinée à être enfoncée axialement dans l'alésage de ladite jupe pour assurer un contact étanche entre ladite jupe et ladite extrémité, ledit dispositif d'obturation comprenant des moyens d'enfoncement propres à enfoncer ladite goupille dans l'alésage de ladite jupe.

Elle s'applique en particulier à l'obturation d'un conduit hydraulique d'un système hydraulique, notamment dans un aéronef.

Un tel système hydraulique comprend en effet fréquemment un ou plusieurs conduits débouchant dont il est nécessaire d'obturer l'extrémité de manière étanche.

Pour réaliser cette obturation, il est connu d'utiliser des bouchons comprenant d'une part une jupe destinée à être insérée axialement dans l'alésage du conduit, et une goupille propre à être insérée à l'intérieur de la jupe de manière à réaliser l'expansion de la jupe dans l'alésage du conduit, et assurer ainsi un maintien ferme et étanche de l'ensemble du bouchon dans le conduit.

De tels bouchons sont par exemple commercialisés par la société LEE COMPANY.

La mise en place d'un tel bouchon est réalisée en insérant dans un premier temps la jupe dans l'alésage du conduit, puis en enfonçant la goupille dans la jupe jusqu'à ce que ce bouchon atteigne une cote déterminée, c'est-à-dire une position axiale déterminée par rapport à la jupe.

L'enfoncement de la goupille dans la jupe est par exemple mis en oeuvre au moyen d'un jet d'enfoncement et d'un marteau. La goupille est ainsi enfoncée par impulsions successives appliquées par le marteau sur la goupille par l'intermédiaire du jet.

Cependant, le jet peut causer, par rebond, des dommages sur le corps hydraulique, la jupe et la goupille, et ainsi créer des défauts.

Alternativement, l'enfoncement de la goupille dans la jupe peut être mis en oeuvre au moyen d'une presse munie d'un poussoir. La goupille est ainsi enfoncée progressivement en appliquant le poussoir contre la goupille et en appliquant une pression sur la goupille par l'intermédiaire du poussoir par actionnement de la presse.

La cote finale de la goupille doit être aussi proche que possible de la cote souhaitée. En effet, un enfoncement insuffisant de la goupille dans la jupe peut résulter en une mauvaise étanchéité, et donc causer des fuites du conduit, tandis qu'un enfoncement excessif est susceptible de provoquer une détérioration de l'alésage du conduit et de la jupe.

Pour contrôler la position axiale de la goupille par rapport à la jupe, il est connu d'utiliser une jauge à comparateur. Cette jauge est mise en place entre deux opérations successives d'enfoncement de la goupille par le jet ou le poussoir, jusqu'à ce que la valeur mesurée par la jauge atteigne ou approche la valeur souhaitée.

Cette méthode de contrôle ne donne pas entièrement satisfaction.

En effet, une telle méthode nécessite de réaliser une succession de séquences d'enfoncement de la goupille et de contrôle de sa position, et s'avère donc longue et fastidieuse.

En outre, cette méthode ne permet de déterminer que ponctuellement la position de la goupille, et ne permet donc pas d'éviter un enfoncement excessif de la goupille dans la jupe entre deux opérations de mesure.

Or, un tel enfoncement excessif impose de retirer du conduit l'ensemble du bouchon, et de poser un nouveau bouchon dans le conduit en reprenant depuis le début les opérations d'insertion de la jupe et d'enfoncement de la goupille.

Par ailleurs, lorsque l'enfoncement de la goupille dans la jupe est mise en oeuvre au moyen d'une presse munie d'un poussoir, la position de la goupille est estimée en repérant une position initiale du poussoir, dans laquelle ce poussoir est en appui contre un bord supérieur de la jupe, puis en mesurant, entre deux opérations successives d'enfoncement, la position du poussoir par rapport à cette position initiale.

Or, cette mesure est susceptible d'être faussée par des déformations de la presse et du corps sous effort, et n'est donc pas représentative de la position réelle de la goupille par rapport à la jupe.

L'invention a donc pour but de résoudre les inconvénients mentionnés ci-dessus, et proposer un dispositif d'obturation d'une extrémité d'un conduit au moyen d'un bouchon d'étanchéité qui permette d'obtenir une étanchéité optimale du conduit obturé.

A cet effet, l'invention a pour objet un dispositif d'obturation du type précité, caractérisé en ce qu'il comporte en outre des moyens de détermination propres à déterminer une position axiale instantanée de ladite goupille par rapport à ladite jupe au fur et à mesure de l'enfoncement de ladite goupille dans l'alésage de ladite jupe par lesdits moyens d'enfoncement.

Selon d'autres aspects de l'invention, le dispositif comprend l'une ou plusieurs des caractéristiques suivantes :
- lesdits moyens d'enfoncement comprennent un corps d'appui propre à être maintenu dans une position fixe par rapport à ladite jupe ;
- lesdits moyens d'enfoncement comprennent un poussoir propre à être entraîné en translation suivant la direction axiale au moyen d'une presse, ledit poussoir étant propre à exercer une pression sur ladite goupille pour générer un déplacement axial de ladite goupille ;
- lesdits moyens de détermination sont propres à mesurer un déplacement dudit poussoir par rapport audit corps d'appui au fur et à mesure de l'enfoncement de ladite goupille dans l'alésage de ladite jupe ;
- lesdits moyens de détermination comprennent un capteur de déplacement propre à déterminer un déplacement dudit poussoir par rapport audit corps d'appui au fur et à mesure de l'enfoncement de ladite goupille dans l'alésage de ladite jupe ;
- que lesdits moyens d'enfoncement comprennent en outre un nez de presse propre à être actionné par ladite presse pour entraîner en translation axiale ledit poussoir, ledit nez de presse comportant une cavité axiale dans laquelle est logé ledit capteur de déplacement ;
- le dispositif d'obturation comporte en outre des moyens de centrage propres à déterminer une position radiale dudit poussoir par rapport à ladite goupille ;
- ledit poussoir comporte un canal axial, et lesdits moyens de centrage comportent un fibroscope reçu dans ledit canal ;
- lesdits moyens de centrage comportent une caméra propre à acquérir une image de l'extrémité du conduit ;
- lesdits moyens de centrage sont propres à comparer la position radiale instantanée dudit poussoir par rapport à ladite goupille à une position radiale de consigne, et à commander un déplacement radial de ladite presse en fonction de l'écart entre la position radiale instantanée et ladite position radiale de consigne ;
- lesdits moyens de détermination sont propres à comparer la position axiale instantanée de ladite goupille par rapport à ladite jupe à une position de consigne, et à commander l'actionnement de ladite presse en fonction de l'écart entre la position axiale instantanée et ladite position de consigne.

L'invention a également pour objet un procédé d'obturation d'une extrémité d'un conduit par un bouchon d'étanchéité comprenant une jupe tubulaire munie d'un alésage axial, préalablement insérée dans l'extrémité dudit conduit, et une goupille destinée à être enfoncée axialement dans l'alésage de ladite jupe pour assurer un contact étanche entre ladite jupe et ladite extrémité, ledit procédé comprenant une étape d'enfoncement de ladite goupille dans l'alésage de ladite jupe, ledit procédé étant caractérisé en ce qu'il comporte en outre la détermination d'une position axiale instantanée de ladite goupille par rapport à ladite jupe, mise en oeuvre au fur et à mesure de l'enfoncement de ladite goupille dans l'alésage de ladite jupe.

Selon un autre aspect de l'invention, le procédé comprend une étape de comparaison de ladite position axiale instantanée à une position de consigne, et en ce que ladite étape d'enfoncement est mise en oeuvre tant que ladite position axiale instantanée diffère d'une position de consigne prédéterminée.

L'invention sera mieux comprise à la lecture de la description qui va suivre, donnée uniquement à titre d'exemple et faite en se référant aux figures annexées parmi lesquelles :
- la Figure 1 est une vue selon une coupe axiale d'une portion d'un conduit muni d'un bouchon, dans une position intermédiaire de montage du bouchon dans le conduit ;
- la Figure 2 est une vue selon une coupe axiale de la portion de conduit selon la figure 1, dans une position d'obturation du conduit par ledit bouchon ;
- la Figure 3 est une vue schématique d'un dispositif d'obturation selon un mode de réalisation de l'invention ;
- la Figure 4 est une vue selon une première coupe axiale d'une partie du dispositif d'obturation de la Figure 3 ;
- la Figure 5 est une vue similaire à la Figure 4, selon une deuxième coupe axiale orthogonale à la première coupe axiale, du dispositif d'obturation de la Figure 3 ;
- les Figures 6 à 8 illustrent schématiquement des étapes du procédé selon l'invention ;
- la Figure 9 est une vue schématique d'un dispositif d'obturation selon une variante du mode de réalisation des Figures 3 à 8.

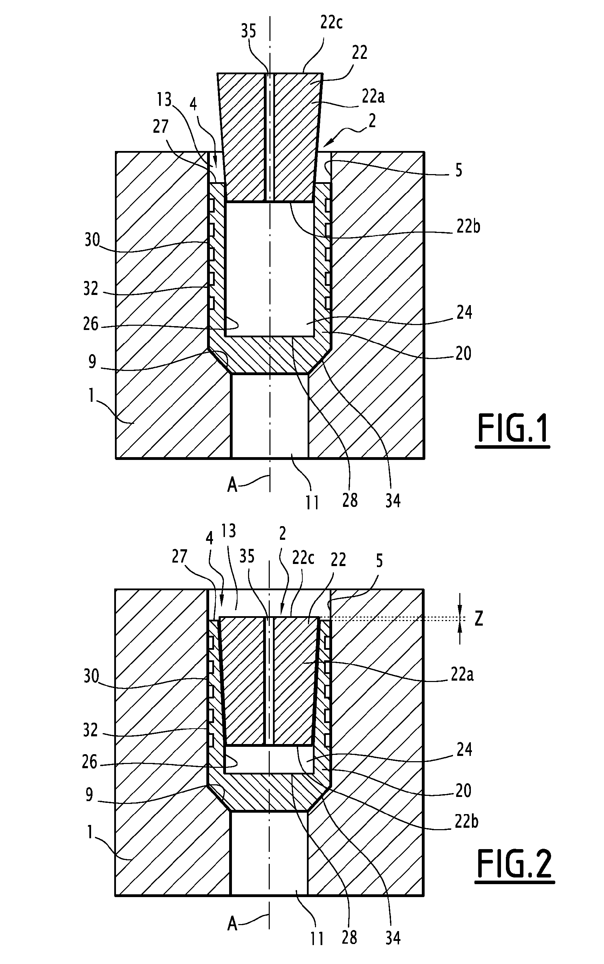

On a représenté sur les Figures 1 et 2 une vue en coupe d'une extrémité d'un conduit 1 hydraulique munie d'un bouchon 2.

Le conduit 1 est de forme tubulaire autour d'un axe A. Il comporte, du côté de son ouverture 4, une paroi interne 5 cylindrique.

Le conduit 1 présente une section transversale circulaire s'élargissant en direction de l'ouverture 4 du conduit 1 en formant un épaulement de butée 9. Le conduit 1 présente ainsi, en direction de l'ouverture 4, une première section 11 de diamètre d1 suivie d'une deuxième 13 section de diamètre d2 supérieur à d1. La deuxième section 13 sera également appelée par la suite extrémité du conduit 1.

Dans tout ce qui suit, les orientations choisies sont indicatives et s'entendent par rapport aux Figures 1 à 8. En particulier, les termes « supérieur », « inférieur », « haut », « bas », s'entendent de manière relative par rapport à l'orientation choisie sur les Figures.

Le bouchon 2 comporte une jupe 20 et une goupille 22.

La jupe 20 est un corps cylindrique destiné à être inséré dans l'extrémité 13 du conduit 1. La jupe 20 comporte un alésage axial 24 sensiblement cylindrique. L'alésage 24 est destiné à déboucher vers l'extérieur du conduit 1 lorsque la jupe 20 est en position dans le conduit 1.

L'alésage 24 délimite dans le corps de la jupe 20 une paroi latérale 26, qui se termine d'un côté par un bord transversal 27, et de l'autre côté par un fond 28.

La paroi latérale 26 est de forme annulaire autour d'un axe se confondant avec l'axe A du conduit 1 lorsque la jupe 20 est en position dans le conduit 1. La surface extérieure 30 de la paroi latérale 26 présente un diamètre sensiblement égal au diamètre de l'extrémité 13 du conduit 1.

La surface extérieure 30 de la paroi latérale 26 comprend une pluralité de rainures annulaires 32, destinées à permettre un ancrage de la jupe 20 et d'assurer l'étanchéité de la paroi latérale 26 lors de l'insertion de la goupille 22 dans l'alésage 24.

Le fond 28, de forme circulaire, ferme la jupe 20 du côté de celle-ci qui est destinée à être insérée à l'intérieur du conduit 1. La surface extérieure 32 du fond 28 comporte une portion annulaire tronconique 34 propre à venir en appui contre l'épaulement de butée 9 du conduit 1 lorsque la jupe 20 est insérée dans le conduit 24.

La goupille 22 est un corps de forme générale tronconique, propre à être enfoncé dans l'alésage 24 de la jupe 20.

La goupille 22 comporte une surface latérale 22a tronconique, ainsi qu'une paroi inférieure 22b et une paroi supérieur 22c destinées à être orientées respectivement vers l'intérieur et vers l'extérieur de l'alésage 24 lors de l'insertion de la goupille 22 dans la jupe 20.

La surface latérale 22a de la goupille 22 est propre à exercer une pression contre la paroi latérale 26 de la jupe 20 lors de son enfoncement dans l'alésage 24 de la jupe 20. Sous cette pression, la paroi latérale 26 se déforme élastiquement pour venir en appui contre la paroi interne 5 de l'extrémité 13 du conduit 1, en assurant un contact étanche entre ces deux parois.

On appellera par la suite cote de la goupille 22 par rapport à la jupe 20 la distance z selon l'axe A entre la paroi supérieur 22c de la goupille 22 et le bord transversal 27 de la jupe 20.

La goupille 22 comporte un trou d'évent 35 destiné à permettre l'évacuation de l'air comprimé entre jupe et goupille.

La goupille 22 est propre à être enfoncée dans la jupe 20 le long de l'axe A entre une position initiale d'insertion représentée sur la Figure 1 et une position finale d'expansion radiale représentée sur la Figure 2.

Dans la position d'expansion radiale, la goupille 22 écarte radialement la jupe 20 de l'axe A comme précisé plus haut.

La goupille 22 est ainsi propre à assurer un contact étanche entre la jupe 20 et la paroi interne 5 du conduit 1.

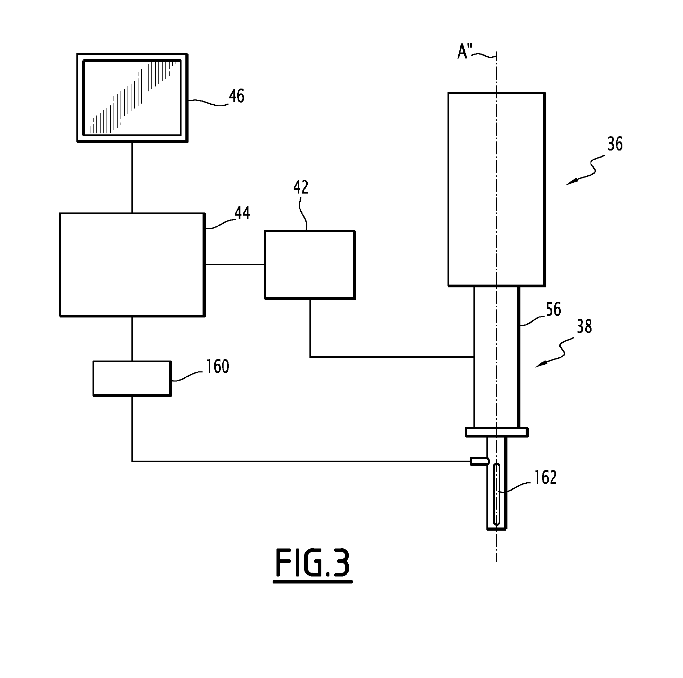

On a représenté sur la Figure 3 de manière schématique un dispositif d'obturation 36 selon un mode de réalisation de l'invention, pour l'obturation d'une extrémité 13 d'un conduit 1 au moyen d'un bouchon d'étanchéité tel qu'illustré sur les Figures 1 et 2.

Le dispositif d'obturation 36 comprend des moyens 38 d'enfoncement propres à enfoncer la goupille 22 dans l'alésage 24 de la jupe 20. La jupe 20 est préalablement insérée dans le conduit 1 jusqu'à ce que la portion annulaire tronconique 34 soit en appui contre l'épaulement de butée 9 du conduit 1.

Le dispositif d'obturation 36 comporte en outre des moyens de détermination de la position axiale de la goupille 22 par rapport à la jupe 20 au fur et à mesure de son enfoncement dans l'alésage 24 de la jupe 20, ainsi que des moyens de centrage des moyens 38 d'enfoncement par rapport à la goupille 22.

Le dispositif 36 comprend par ailleurs un module 42 de traitement d'informations relatives à la position axiale de la goupille, une unité de calcul 44 reliée à la camera 160 et au module de traitement 42, et un dispositif d'affichage 46, par exemple un écran.

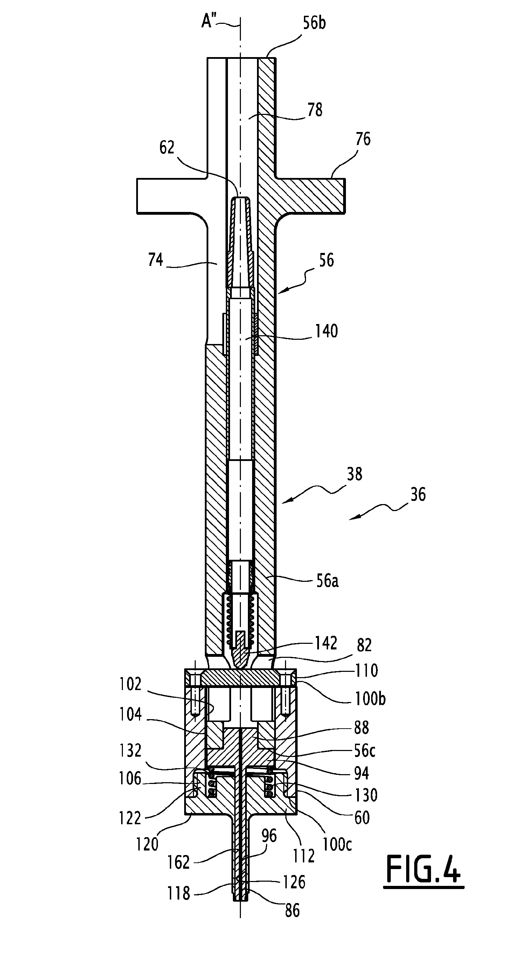

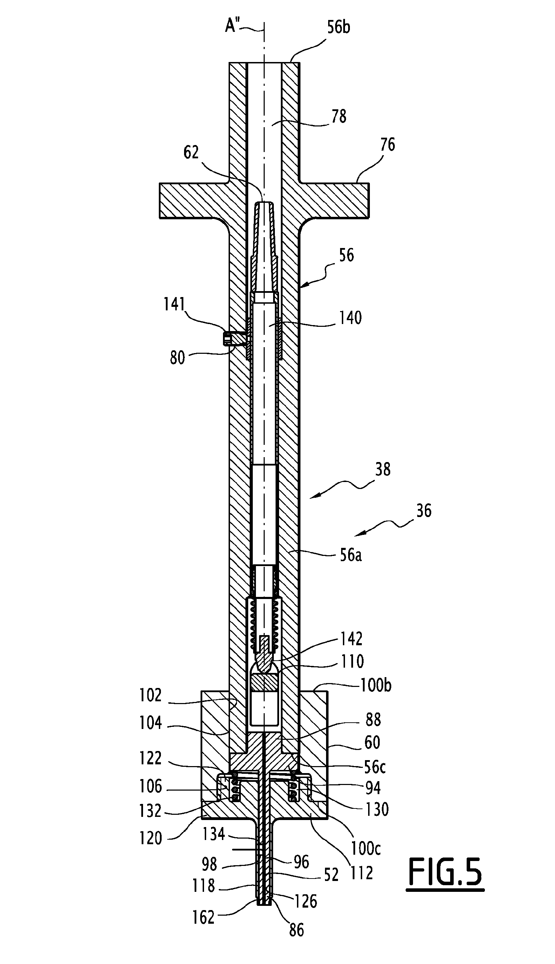

On a représenté sur les Figures 4 et 5 une vue selon une coupe axiale d'une partie du dispositif d'obturation 36 de la Figure 3, incluant les moyens 38 d'enfoncement, les moyens de détermination de la position axiale de la goupille 22 et les moyens de centrage.

Les moyens 38 d'enfoncement comprennent un poussoir 52 et un nez de presse 56.

Les moyens de détermination de la position axiale de la goupille 22 comprennent un corps d'appui 60, monté sur le nez de presse 56 et destiné à être intercalé entre le nez de presse 56 et la jupe 20, et un capteur de déplacement 62, propre à déterminer un déplacement du nez de presse 56 par rapport au corps d'appui 60 pour en déduire le déplacement du poussoir 52 par rapport à la jupe 20.

Le nez de presse 56 est propre à être monté sur un coulisseau d'une presse et à entraîner le poussoir 52 en translation axiale pour enfoncer la goupille 22 dans l'alésage 24 de la jupe 20.

La presse est par exemple une presse manuelle, propre à être actionnée par un utilisateur au moyen d'un volant rotatif, la rotation de ce volant rotatif entraînant le nez de presse 56 en translation axiale.

Le nez de presse 56 est un corps creux de forme générale tubulaire autour d'un axe A". Il comporte ainsi une paroi latérale 56a se terminant en ses extrémités inférieure et supérieure 56b et 56c.

L'extrémité supérieure du nez de presse 56 est destinée à être montée sur le coulisseau de la presse. L'extrémité supérieure comporte ainsi une fente diamétrale 74, visible sur la Figure 4, destinée au passage du câble du capteur 140, ainsi qu'une collerette transversale 76, traversée par la fente 74, adaptée pour être fixée à ce coulisseau.

Le nez de presse 56 est ainsi propre à être entraîné en translation par la presse selon l'axe A".

Le nez de presse 56 comporte, sur toute sa longueur, une cavité 78 centrée autour de l'axe A". La cavité 78 est cylindrique. La cavité 78 reçoit le capteur de déplacement 62.

Par ailleurs, le nez de presse 56 comporte un alésage radial 80, visible sur la Figure 5, traversant la paroi latérale 56a, de manière à permettre le passage d'une vis de maintien 141 pour la fixation du capteur de déplacement 62 au nez de presse 56 par l'intermédiaire d'une bague.

En outre, l'extrémité inférieure du nez de presse 56 comporte une fente diamétrale 82, visible sur la Figure 4, destinée au passage d'une plaquette 110 du corps d'appui 60 et au blocage en rotation autour de l'axe A" du corps d'appui 60 par rapport au nez de presse 56.

Les fentes 74 et 82 sont par exemple alignées parallèlement à l'axe A".

Le poussoir 52 est propre à être actionné par une presse, par l'intermédiaire du nez de presse 56, pour exercer une pression contre la goupille 22 et enfoncer celle-ci dans l'alésage 24 de la jupe 20.

Le poussoir 52 comprend ainsi un tronçon inférieur formant une tige 86 dont l'extrémité libre inférieure est destinée à être appliquée sur la goupille 22.

Le poussoir 52 comprend par ailleurs un tronçon supérieur 88 engagé dans la cavité 78 du nez de presse 56, et une collerette 94 faisant saillie transversalement entre la tige 86 et le tronçon supérieur 88, venant en appui contre le bord transversal inférieur 56c du nez de presse 56.

Le diamètre extérieur du tronçon supérieur 88 est ainsi adapté pour être reçu par emboîtement dans l'extrémité inférieure de la cavité 78.

Le diamètre extérieur de la collerette 94 est sensiblement égal au diamètre extérieur de la paroi latérale 56a du nez de presse 56.

Le poussoir 52 comprend en outre un canal axial 96 traversant la tige 86, formant un trou d'évent, ainsi qu'un logement d'un fibroscope 98, visible sur la Figure 5.

Le nez de presse 56 est propre à exercer une pression axiale contre le poussoir 52 par appui de l'extrémité inférieure 56c contre la collerette 94. Ainsi, le poussoir 52 est propre à être entraîné en translation par le nez de presse 56 selon l'axe A".

Le corps d'appui 60 comprend un fourreau 100 en forme générale de cylindre creux. Le fourreau 100 se termine en ses extrémités inférieure et supérieure respectivement par un bord transversal supérieur 100b et un bord transversal inférieur 100c.

Le fourreau 100 comporte un alésage 102 cylindrique et coaxial à la cavité 78 du nez de presse 56.

Cet alésage 102 comporte une section transversale circulaire s'élargissant vers le bas. L'alésage 102 présente ainsi un tronçon supérieur 104 de diamètre intérieur sensiblement égal au diamètre extérieur de la paroi latérale 56a du nez de presse 56, suivie d'un tronçon inférieur 106 de plus grand diamètre.

La paroi intérieure du tronçon inférieur 106 est filetée.

Le fourreau 100 est monté coulissant parallèlement à l'axe A" autour de l'extrémité inférieure du nez de presse 56 et du poussoir 52. En particulier, le fourreau 100 est monté de telle sorte que l'extrémité inférieure 56c du nez de presse 56 et la collerette 94 soient guidés par la paroi intérieure de la portion supérieure 104.

En outre, le fourreau 100 est bloqué en rotation autour de l'axe A" par rapport au nez de presse 56.

Le fourreau 100 comprend en effet une plaquette 110 démontable, fixée ici par vissage sur le bord transversal supérieur 100b du fourreau 100. Cette plaquette est logée dans la fente 82 du nez de presse 56 en traversant diamétralement le nez de presse 56.

La largeur de la plaquette 110 est sensiblement égale à la largeur de la fente 82, de telle sorte que la plaquette 100 maintient le fourreau 100 solidaire du nez de presse 56 en rotation autour de l'axe A". Néanmoins la plaquette 110 est libre de coulisser dans la fente 82, autorisant un coulissement axial du fourreau 100 par rapport au nez de presse 56.

Le corps d'appui 60 comprend par ailleurs une pièce d'appui 112 immobilisée sous le fourreau 100 et destinée à être intercalée radialement entre le poussoir 52 et la jupe 20.

Cette pièce d'appui 112 comporte une portion inférieure 118 de guidage de la tige 86, une collerette 120, et une tête 122 de fixation au fourreau 100.

La pièce d'appui 112 comporte un alésage central 126 traversant, centré autour de l'axe A". Le diamètre intérieur de l'alésage central 126 est sensiblement égal au diamètre extérieur de la tige 86, de telle sorte que la tige 86, reçue dans cet alésage 126, est propre à coulisser axialement le long de l'axe A" par rapport à la pièce d'appui 112.

La tête 122 de fixation est de forme générale cylindrique. Elle comporte sur sa surface latérale extérieure un filetage complémentaire du filetage du tronçon inférieur 106 du fourreau 100. La tête 122 de fixation est ainsi fixée par vissage dans le tronçon inférieur 106 du fourreau 100.

La tête 122 de fixation comporte en outre une cavité annulaire 130 centrée autour de l'axe A", dans laquelle est logé un ressort 132 hélicoïdal. La cavité 130 débouche vers le haut.

La collerette 120 fait saillie radialement entre la tête 122 de fixation et la portion de guidage 118.

La portion de guidage 118 est de forme tubulaire allongée. Elle forme un guide pour la tige 86 lors de son coulissement selon l'axe A". Elle comporte à son extrémité inférieure un bord annulaire destiné à venir en appui contre la jupe 20.

Le dispositif d'obturation 36 est monté en insérant le poussoir 52 dans l'alésage 102 du fourreau 100, la tige 86 étant insérée dans la portion de guidage 118 et la collerette 94 du poussoir 52 venant en appui sur le ressort 132. Le poussoir 52, le nez de presse 56 et le corps d'appui 60 sont alors alignées coaxialement autour de l'axe A".

Par ailleurs, le nez de presse 56 est reçu dans l'alésage 102 du fourreau, son bord transversal inférieur 56c étant en appui contre la collerette 94 et la plaquette 110 étant logée dans la fente 82.

Lorsque le dispositif 36 est ainsi monté, le nez de presse 56 est propre à coulisser axialement par rapport au corps d'appui 60, tout en restant fixe en rotation autour de l'axe A" par rapport au corps d'appui 60.

Lors d'un coulissement du nez de presse 56 vers le bas, le nez de presse 56 exerce un effort sur le poussoir 52 et entraîne celui-ci en translation le long de l'axe A" vers le bas par rapport au corps d'appui 60, ce mouvement entraînant une compression du ressort 132 et un effort sur la jupe 20.

A l'inverse, lors d'un coulissement du nez de presse 56 vers le haut, le ressort 132 se détend et exerce un effort entre le poussoir 52 et le corps d'appui 60, le long de l'axe A", cet effort maintenant le poussoir 52 plaqué contre le nez de presse 56.

Le capteur de déplacement 62 est reçu dans la cavité 78 du nez de presse 56

Le capteur de déplacement 62 comporte un corps supérieur 140, maintenu solidaire du nez de presse 56 au moyen d'une bague et d'une vis de maintien 141 traversant l'alésage radial 80.

Le capteur de déplacement 62 comporte en outre, à son extrémité inférieure, un palpeur 142 faisant saillie axialement vers le bas depuis le corps supérieur 140. Le palpeur 142 est propre à coulisser selon l'axe A" à l'intérieur du corps 140 du capteur.

Le palpeur 142 est maintenu contre la surface supérieure de la plaquette 110 au moyen d'un ressort interne au capteur. Lorsque le palpeur 142 est ainsi en appui contre la surface supérieure de la plaquette 110, elle reste fixe par rapport au corps d'appui 60 lors d'un mouvement en translation vers le bas du nez de presse 56 et du corps 140 du capteur.

La course du palpeur 142 est inférieure à la course du corps d'appui 60.

Le capteur de déplacement 62 est par ailleurs relié au module 42 de traitement et par exemple au moyen d'un câble électrique reçu dans la cavité 78.

Le capteur de déplacement 62 est propre à déterminer la position instantanée de du palpeur 142 par rapport au corps 140 du capteur, et à transmettre un signal représentatif de cette position au module 42 de traitement.

Les moyens de centrage comprennent une caméra 160 et un fibroscope 162 visibles sur la Figure 3.

Une première extrémité du fibroscope 162 est reliée à la caméra 160. La deuxième extrémité du fibroscope 162 est insérée à l'intérieur du canal axial 96 du poussoir 52, parallèlement à l'axe A". Cette deuxième extrémité est orientée vers le bas, de manière à permettre une visualisation par la caméra 160 de la goupille 22, de la jupe 20 et de l'extrémité 13 du conduit 1 lorsque le poussoir 52 est disposé à l'aplomb de la goupille 22.

La caméra 160 est propre à acquérir en chaque instant une image de la goupille 22, de la jupe 20 et de l'extrémité 13 du conduit 1 lorsque le poussoir 52 est disposé à l'aplomb de la goupille 22, et à transmettre cette image à l'unité de calcul 44.

Le module 42 de traitement est propre à recevoir et à traiter des informations de position issues du capteur de déplacement 62, et à en déduire la cote de la goupille 22 par rapport à la jupe.

En particulier, le module 42 de traitement est propre à déterminer, à partir de la position instantanée du palpeur 142 par rapport au corps 140 du capteur, la cote instantanée de la goupille 22 par rapport à la jupe 20, comme décrit ci-après.

Par ailleurs, l'unité de calcul 44 est propre à recevoir et à traiter des images issues de la caméra 160, et à en déduire la position radiale du poussoir 52 par rapport au conduit 1 et à la goupille 22, pour repérer un éventuel désaxage entre les axes A et A" du conduit 1 et du poussoir 52.

L'unité de calcul 44 est ainsi propre à repérer, à partir de chaque image reçue de la caméra 160, les contours de la goupille 22, de la jupe 20 et de l'extrémité 13 du conduit 1. L'unité de calcul 44 est également propre à déterminer, à partir de ces contours, la position de l'axe A du conduit 1 et de la goupille 22, et à comparer cette position avec la position de l'axe A" du poussoir, pour en déduire un éventuel décalage entre ces deux axes.

Par ailleurs, le dispositif d'affichage 46 est propre à afficher, en chaque instant, l'image issue de la caméra 160 représentant les contours de la goupille 22, de la jupe 20 et de l'extrémité 13 du conduit (axe A), à laquelle est superposée une image de référence préenregistrée représentative de l'axe A"du dispositif 36.

Les moyens de centrage permettent ainsi à un utilisateur de vérifier la coaxialité de l'axe A" du dispositif 36 avec l'axe A du conduit 1 et du bouchon 2.

Le nez de presse 56 est mobile en translation le long de l'axe A" par rapport au corps d'appui 60 sur une première course inactive dans laquelle le capteur 62 est au repos et ensuite sur une deuxième course active dans laquelle le capteur 62 est actif.

Lors de la première course, lorsque le nez de presse 56, sous l'action de la presse, coulisse vers le bas par rapport au corps d'appui 60, il entraîne le poussoir 52 vers le bas par rapport au corps d'appui 60, provoquant une compression du ressort 132.

Par ailleurs, lors de ce déplacement, le nez de presse 56 entraîne le palpeur 142 et le corps 140 du capteur jusqu'à un état nominal dans lequel le palpeur 142 est au contact de la plaquette 110.

A partir de cette position nominale d'activation du capteur 62, le capteur de déplacement 62 est actif.

En effet, lors de la deuxième course, lorsque le nez de presse 56 coulisse davantage vers le bas par rapport au corps d'appui 60, il entraîne en translation le corps 140 du capteur, le palpeur 142 restant en appui contre la plaquette 110. Le mouvement relatif du corps 140 du capteur par rapport au palpeur 142 provoque une compression du ressort du capteur de déplacement 62.

Lors de ce mouvement, le capteur de déplacement 62 mesure en chaque instant la position relative du palpeur 142 par rapport au corps 140 du capteur, et transmet au module 42 de traitement un signal représentatif de cette position.

Lors du déplacement du nez de presse 56, les mouvements respectifs du corps supérieur 140, du nez de presse 56 et du poussoir 52 sont conjoints. Par ailleurs, le palpeur 142 reste en appui contre la plaquette 110, donc reste fixe par rapport au corps d'appui 60.

Ainsi, le déplacement relatif du palpeur 142 par rapport au corps 140 du capteur par rapport à la position nominale est égal au déplacement relatif du poussoir 52 par rapport au corps d'appui 60 depuis cet état nominal.

Ainsi, à partir de la position relative du palpeur 142 par rapport au corps supérieur 140 transmise en chaque instant par le capteur de déplacement 62, l'unité de calcul 44 déduit en chaque instant le déplacement relatif du poussoir 52 par rapport au corps d'appui 60 depuis la position nominale.

De même, lorsque le nez de presse 56 est relevé, il entraîne en translation le corps supérieur 140, tandis que le palpeur 142 reste en appui contre la plaquette 110 jusqu'à ce que l'état nominal soit à nouveau atteint. Le mouvement relatif du corps 140 du capteur par rapport au palpeur 142 entraîne une détente du ressort du capteur de déplacement 62. Lorsque le palpeur 142 atteint sa course maximum, le palpeur 142 est entraîné par le corps supérieur en translation vers le haut.

Par ailleurs, le ressort 132 se détend et maintient la collerette 94 en appui contre le bord inférieur 56c du nez de presse 56.

Ainsi, lorsque le nez de presse 56 est relevé, et tant que la position nominale n'est pas atteinte, les mouvements respectifs du corps 140 du capteur, du nez de presse 56 et du poussoir 52 sont solidaires, et le palpeur 142 reste en contact avec le corps d'appui 60.

Comme indiqué ci-dessus, le module 42 de traitement déduit en chaque instant le déplacement relatif du poussoir 52 par rapport au corps d'appui 60 par rapport à l'état nominal.

Le dispositif d'obturation 36 peut être utilisé avec différents types de bouchons, de diamètre et de longueur variables, en particulier en choisissant une pièce d'appui 112 et un poussoir 52 de diamètre et de longueur adaptés au type de bouchon à poser. La pièce d'appui 112 et le poussoir 52 peuvent en effet être démontés en dévissant la pièce d'appui 112 du fourreau 100, et ainsi être remplacés, entre deux opérations de pose d'un premier et d'un deuxième bouchons de types différents, par une pièce d'appui 112 et un poussoir 52 adaptés au deuxième bouchon.

On va maintenant décrire les principales étapes de mise en oeuvre du dispositif d'obturation 36 pour l'obturation de l'extrémité 13 du conduit 1 au moyen du bouchon 2, la jupe 20 ayant préalablement été insérée dans cette extrémité 13.

L'obturation de l'extrémité 13 du conduit 1 est réalisée en enfonçant la goupille 22 axialement dans l'alésage 24 de la jupe 20 au moyen du dispositif 36, tout en contrôlant au fur et à mesure de son enfoncement la cote de la goupille 22, jusqu'à atteindre la cote souhaitée.

La position du capteur de déplacement 62 dans le nez de presse 56, les dimensions relatives du poussoir 52 et de la portion de guidage 118, sont choisis de telle sorte que lors de l'enfoncement de la goupille 22 par le poussoir 52, c'est-à-dire entre la cote de début d'enfoncement de la goupille 22 et la cote finale souhaitée, le capteur d'enfoncement 62 est actif.

En outre le poussoir 52 et la pièce d'appui 112 sont choisis en fonction du type du bouchon, notamment en fonction du diamètre et de la longueur du bouchon 2.

En particulier, la pièce d'appui 112 est choisie de telle sorte que le bord annulaire inférieur de la portion de guidage 118 puisse venir en appui contre le bord transversal 27a de la jupe 20. En outre, le poussoir 52 est choisi de diamètre externe sensiblement égal au diamètre de la goupille 22.

Par ailleurs, les longueurs du poussoir 52 et de la pièce d'appui 112 sont choisies de telle sorte que la course du poussoir 52 permette d'enfoncer la goupille 22 jusqu'à la cote souhaitée.

Dans une étape d'étalonnage, le nez de presse 56 du dispositif 36 est monté sur le coulisseau d'une presse, et la position du poussoir 52 correspondant à une cote nulle de la goupille 22 est repérée et enregistrée.

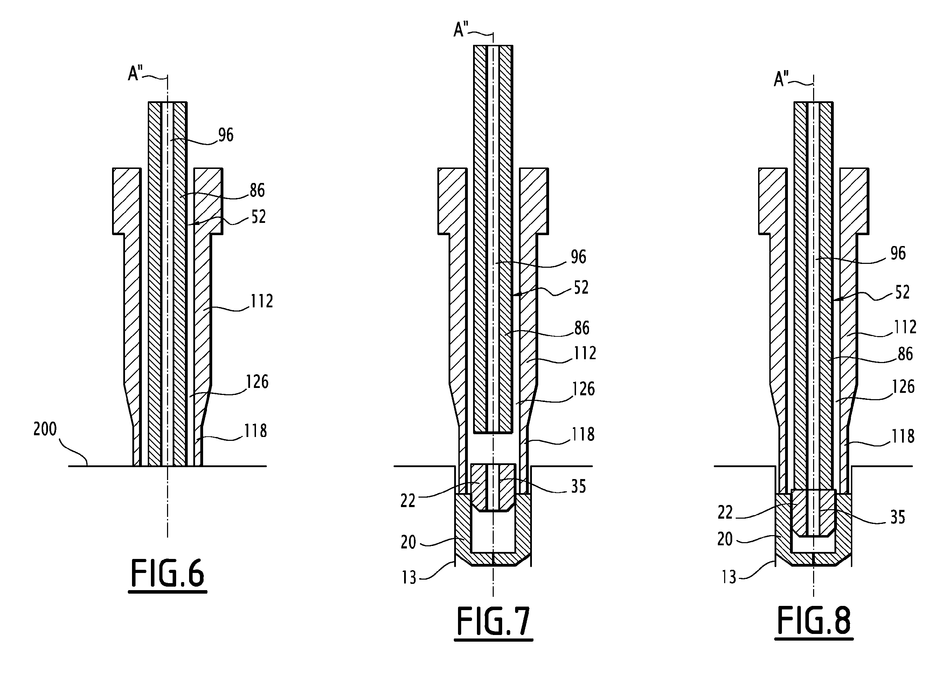

A cette fin, comme illustré schématiquement sur la Figure 6, l'utilisateur dispose la pièce d'appui 112 en appui sur une surface plane 200 dure, par exemple un marbre, et actionne la presse pour entraîner le poussoir 52, par l'intermédiaire du nez de presse 56, jusqu'à ce que le poussoir 52 soit au contact de la surface 200. Un effort réduit prédéterminé est maintenu sur le poussoir 52.

Dans cette position, appelée par la suite position de référence, le poussoir 52 et la pièce d'appui 112 sont en affleurement.

La position relative du palpeur 142 par rapport au corps fixe 140 correspondant à cette position de référence est enregistrée par le module 42 de traitement.

Lors d'une étape de centrage, la goupille 22 est posée dans l'alésage 24 de la jupe, et le dispositif 36 d'obturation est disposé à l'aplomb du conduit 1.

La caméra 160 acquiert des images de la goupille 22, de la jupe 20 et de l'extrémité 13 du conduit 1, et transmet ces images à l'unité de calcul 44.

L'unité de calcul 44 repère alors, à partir de chaque image reçue de la caméra 160, les contours de la goupille 22, de la jupe 20 et de l'extrémité 13 du conduit 1, et détermine, à partir de ces contours, la position de l'axe A par rapport à l'axe A" du poussoir.

Le dispositif d'affichage 46 affiche, en chaque instant, l'image issue de la caméra 160 en cet instant, et superpose à chaque image l'image de référence enregistrée représentative de l'axe A".

L'utilisateur déplace alors radialement la presse par rapport au conduit, jusqu'à ce que les axes A et A" soient alignés, comme illustré sur la Figure 7.

Lors d'une étape d'obturation, l'utilisateur actionne la presse vers le bas jusqu'à ce que la pièce d'appui 112 soit en appui contre le bord transversal 27 de la jupe 20. Le corps d'appui 60 est ainsi maintenu fixe en translation par rapport à la jupe 20.

La portion 118 de guidage de la pièce d'appui 112 entoure alors la goupille 22.

L'utilisateur actionne alors la presse pour entraîner le poussoir 52 vers le bas. Au fur et à mesure de ce mouvement, le poussoir 52 entre en contact avec la paroi supérieure 22c de la goupille 22 puis exerce une pression sur la goupille 22, en l'enfonçant ainsi dans l'alésage 24 de la jupe 20, comme illustré sur la Figure 8.

Au fur et à mesure de l'enfoncement de la goupille 22 par le poussoir 52, le capteur de déplacement 62 détermine en chaque instant la position relative du palpeur 142 par rapport au corps 140 du capteur, et transmet au module 42 de traitement un signal représentatif de cette position.

Le module 42 de traitement en déduit en chaque instant le déplacement relatif du poussoir 52 par rapport au corps d'appui 60 depuis l'état nominal, et détermine ainsi la position relative du poussoir 52 par rapport à la pièce d'appui 112 par rapport à la position de référence.

Puisque le poussoir 52 et la pièce d'appui 112 sont respectivement en appui contre la paroi supérieure 22c de la goupille 22 et le bord transversal 27 de la jupe 20, la position relative du poussoir 52 par rapport à la pièce d'appui 112 est égale à la cote de la goupille 22 par rapport à la jupe 20.

Le dispositif d'affichage 46 affiche cette cote à destination de l'utilisateur. Ainsi, lors de l'actionnement de la presse, l'utilisateur dispose en chaque instant de la cote de la goupille 22 par rapport à la jupe 20, ce qui lui permet d'actionner la presse jusqu'à ce que la cote déterminée par le module 42 de traitement soit égale à la cote de consigne.

L'utilisateur actionne alors la presse pour relever le poussoir à l'écart de la goupille 22.

Puis, lors d'une étape de contrôle, l'utilisateur abaisse à nouveau le poussoir 52 au contact de la goupille 22, avec un effort réduit, identique à l'effort appliqué lors de l'étape d'étalonnage, appliqué sur le poussoir 52 par la presse.

La cote de la goupille 22 par rapport à la jupe 20 est à nouveau déterminée au moyen du capteur de déplacement 62, et comparée avec la cote de consigne.

Il pourrait exister un écart entre la cote atteinte par la goupille 22 avant relèvement de la presse, appelée cote finale, et la cote de la goupille déterminée lors de l'étape de contrôle, appelée cote de contrôle.

Cette écart est dû au fait que la cote finale est déterminée sous effort, le dispositif 36 et la goupille 22 subissant des déformations élastiques, tandis que la cote de contrôle est déterminée sous un effort réduit, sans déformations élastiques.

Cependant, cet écart est faible et quantifiable. Ainsi, la cote de consigne est avantageusement déterminée, à partir de la cote souhaitée, pour intégrer cet écart, de telle sorte que la cote de contrôle soit sensiblement égale à la cote souhaitée.

Il devra toutefois être compris que l'exemple de réalisation présenté ci-dessus n'est pas limitatif.

Notamment, selon une variante du mode de réalisation décrit en référence aux Figures 3 à 8, la presse est une presse motorisée, et le dispositif d'obturation 36 comporte en outre une unité de commande de presse, propre à recevoir du module 42 de traitement la cote instantanée de la goupille 22 par rapport à la jupe 20 et à actionner automatiquement la presse en fonction de cette cote instantanée.

L'unité de commande est ainsi propre à actionner axialement la presse vers le bas tant que la cote instantanée de la goupille 22 n'a pas atteint la cote de consigne, et à relever la presse lors la cote de consigne est atteinte.

Par ailleurs, l'unité de commande de presse est propre à recevoir de l'unité de calcul 44 la position de l'axe A par rapport à l'axe A" du poussoir 52, et à actionner radialement la presse en fonction de cette position pour aligner les axes A et A".

Ainsi, pour obturer le conduit, la presse n'est pas actionnée manuellement par un utilisateur mais automatiquement.

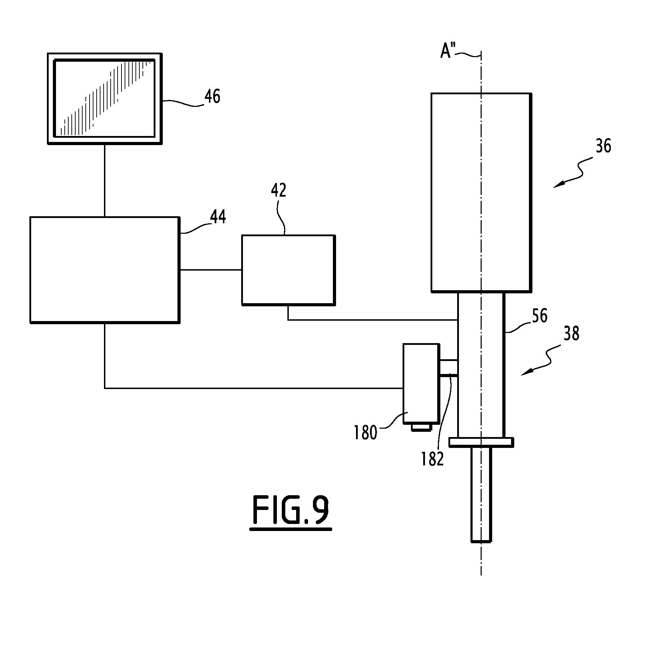

Par ailleurs, selon une autre variante, illustrée sur la Figure 9, le fibroscope 162 et la caméra 160 des moyens de centrage sont remplacés par une caméra 180 disposée au voisinage du dispositif d'obturation 36, de manière à acquérir en chaque instant une image de la goupille 22, de la jupe 20 et de l'extrémité 13 du conduit 1 lorsque le poussoir 52 est disposé à l'aplomb de la goupille 22.

La caméra 180 est par exemple fixée au nez de presse 56 par une pièce de support 182. Elle est propre à transmettre les images acquises à l'unité de calcul 44.

La caméra 180 peut en outre être utilisée à l'issue de l'enfoncement de la goupille 22, pour vérifier visuellement la qualité de la pose du bouchon 2.

Par exemple, à l'issue de cet enfoncement, la caméra 180 est déplacée par rapport au conduit 1 pour être disposée à l'aplomb de l'extrémité 13 obturée, et ainsi fournir une image de cette extrémité obturée.

Ce mode de réalisation permet de fournir une image de meilleure qualité. Il permet également d'améliorer l'adaptabilité du dispositif d'obturation à différents types de bouchons. En effet, le poussoir 52 et la pièce d'appui 112 peuvent être changées sans qu'il soit nécessaire de manipuler les moyens de centrage.

## Revendications

1. Dispositif d'obturation (36) d'une extrémité (13) d'un conduit (1) par un bouchon d'étanchéité (2) comprenant une jupe tubulaire (20) munie d'un alésage axial (24), préalablement insérée dans l'extrémité (13) dudit conduit (1), et une goupille (22) destinée à être enfoncée axialement dans l'alésage (24) de ladite jupe (20) pour assurer un contact étanche entre ladite jupe (20) et ladite extrémité,
ledit dispositif d'obturation (36) comprenant des moyens d'enfoncement (38) propres à enfoncer ladite goupille (22) dans l'alésage (24) de ladite jupe (20),
ledit dispositif d'obturation (36) étant **caractérisé en ce qu'**il comporte en outre des moyens de détermination (62) propres à déterminer une position axiale instantanée de ladite goupille (22) par rapport à ladite jupe (20) au fur et à mesure de l'enfoncement de ladite goupille (22) dans l'alésage (24) de ladite jupe (20) par lesdits moyens d'enfoncement (38).

2. Dispositif d'obturation (36) selon la revendication 1, **caractérisé en ce que** lesdits moyens d'enfoncement (38) comprennent un corps d'appui (60) propre à être maintenu dans une position fixe par rapport à ladite jupe (20).

3. Dispositif d'obturation (36) selon l'une quelconque des revendications 1 ou 2, **caractérisé en ce que** lesdits moyens d'enfoncement (38) comprennent un poussoir (52) propre à être entraîné en translation suivant la direction axiale au moyen d'une presse, ledit poussoir (52) étant propre à exercer une pression sur ladite goupille (22) pour générer un déplacement axial de ladite goupille (22).

4. Dispositif d'obturation (36) selon les revendications 2 et 3, **caractérisé en ce que** ledit poussoir (52) comprend un tronçon inférieur formant une tige (86) dont une extrémité libre inférieure est destinée à être appliquée contre ladite goupille (22).

5. Dispositif d'obturation (36) selon la revendication 4, **caractérisé en ce que** ledit corps d'appui (60) comporte une pièce d'appui (112) comprenant une portion inférieure (118) de guidage de la tige (86), ladite portion de guidage (118) étant propre à entourer ladite goupille (22).

6. Dispositif d'obturation (36) selon les revendications 2 et 3, **caractérisé en ce que** lesdits moyens de détermination (62) sont propres à mesurer un déplacement dudit poussoir (52) par rapport audit corps d'appui (60) au fur et à mesure de l'enfoncement de ladite goupille (22) dans l'alésage (24) de ladite jupe (20).

7. Dispositif d'obturation (36) selon la revendication 6, **caractérisé en ce que** lesdits moyens de détermination comprennent un capteur de déplacement (62) propre à déterminer un déplacement dudit poussoir (52) par rapport audit corps d'appui (60) au fur et à mesure de l'enfoncement de ladite goupille (22) dans l'alésage (24) de ladite jupe (20).

8. Dispositif d'obturation (36) selon la revendication 7, **caractérisé en ce que** lesdits moyens d'enfoncement (38) comprennent en outre un nez de presse (56) propre à être actionné par ladite presse pour entraîner en translation axiale ledit poussoir (52), ledit nez de presse (56) comportant une cavité axiale (78) dans laquelle est logé ledit capteur de déplacement (62).

9. Dispositif d'obturation (36) selon l'une quelconque des revendications 3 à 8, **caractérisé en ce qu'**il comporte en outre des moyens de centrage (160, 162; 180) propres à déterminer une position radiale dudit poussoir (52) par rapport à ladite goupille (22).

10. Dispositif d'obturation (36) selon la revendication 9, **caractérisé en ce que** ledit poussoir (52) comporte un canal axial (96), et **en ce que** lesdits moyens de centrage (160, 162) comportent un fibroscope (162) reçu dans ledit canal (96).

11. Dispositif d'obturation (36) selon la revendication 9, **caractérisé en ce que** lesdits moyens de centrage comportent une caméra (180) propre à acquérir une image de l'extrémité (13) du conduit (1).

12. Dispositif d'obturation (36) selon l'une quelconque des revendications 9 à 11, **caractérisé en ce que** lesdits moyens de centrage (160, 162; 180) sont propres à comparer la position radiale instantanée dudit poussoir (52) par rapport à ladite goupille (22) à une position radiale de consigne, et à commander un déplacement radial de ladite presse en fonction de l'écart entre la position radiale instantanée et ladite position radiale de consigne.

13. Dispositif d'obturation (36) selon l'une quelconque des revendications 3 à 12, **caractérisé en ce que** lesdits moyens de détermination (62) sont propres à comparer la position axiale instantanée de ladite goupille (22) par rapport à ladite jupe (20) à une position de consigne, et à commander l'actionnement de ladite presse en fonction de l'écart entre la position axiale instantanée et ladite position de consigne.

14. Procédé d'obturation d'une extrémité (13) d'un conduit (1) par un bouchon d'étanchéité (2) comprenant une jupe tubulaire (20) munie d'un alésage axial (24), préalablement insérée dans l'extrémité (13) dudit conduit (1), et une goupille (22) destinée à être enfoncée axialement dans l'alésage (24) de ladite jupe (20) pour assurer un contact étanche entre ladite jupe (20) et ladite extrémité,
ledit procédé comprenant une étape d'enfoncement de ladite goupille (22) dans l'alésage (24) de ladite jupe (20),
ledit procédé étant **caractérisé en ce qu'**il comporte en outre la détermination (62) d'une position axiale instantanée de ladite goupille (22) par rapport à ladite jupe (20), mise en oeuvre au fur et à mesure de l'enfoncement de ladite goupille (22) dans l'alésage (24) de ladite jupe (20).

15. Procédé d'obturation selon la revendication 14, **caractérisé en ce qu'**il comprend une étape de comparaison de ladite position axiale instantanée à une position de consigne, et **en ce que** ladite étape d'enfoncement est mise en oeuvre tant que ladite position axiale instantanée diffère d'une position de consigne prédéterminée.
